# EUROPEAN PATENT APPLICATION

(11) **EP 4 809 975 A1**
(43) Date of publication of application: **23.09.2026**
(21) Application number: 25382269.6
(22) Date of filing: 20.03.2025
(51) Int. Cl.: A61C 8/00, A61C 9/00

(54) **BUCCAL SCAN POSITIONING PIN AND DIGITAL WORKFLOW METHOD IN THE IMPLANTATION OF DENTAL PROSTHESES**

(71) Applicant: Tech Xika P.T.T, S.L., 25005 Lleida (ES)
(72) Inventor: Carrero Villarroel, Xavier, 25005 Lleida (ES); Velazquez, Ricardo, 25005 Lleida (ES)
(74) Representative: Carlos Hernando, Borja

(57) **Abstract**

The invention relates to a buccal scan positioning pin and digital workflow method in the implantation of dental prostheses, related, on one hand, to a buccal scan positioning pin, intended to be located in the buccal cavity of a patient, and on the other hand, to a digital workflow method in the implantation of dental prostheses to achieve a precise fit between an original anatomical situation of the buccal cavity and a restored situation of said buccal cavity after a surgical process for the implantation of at least one implant, providing greater precision and a better appearance in the final dental prosthesis obtained after the procedure.

## Description

### OBJECT OF THE INVENTION

The present invention, buccal scan positioning pin and digital workflow method in the implantation of dental prostheses, relates, on one hand, to a buccal scan positioning pin, intended to be located in the buccal cavity of a patient, and on the other hand, to a digital workflow method in the implantation of dental prostheses to achieve a precise fit between an original anatomical situation of the buccal cavity and a restored situation of said buccal cavity after a surgical process for the implantation of at least one implant, providing greater precision and a better appearance in the final dental prosthesis obtained after the procedure.

The field of application of the invention is dental implantology, and particularly processes that incorporate scanning the buccal cavity, contributing to better implantation and manufacture of a dental prosthesis adapted to each patient's buccal circumstances.

### BACKGROUND OF THE INVENTION

In the field of dental implantology, especially in cases where the restoration of full or partial prostheses is required, it is common to perform intraoral scans for the manufacture of precise dental prostheses.

Intraoral scanning is an advanced technique that allows the patient's buccal cavity to be digitally captured in dental implantology procedures. Its main objective is to obtain a precise three-dimensional model that facilitates the planning and manufacture of a prosthesis adapted to the patient's anatomy. This process replaces conventional impressions with materials such as alginate or silicone, improving patient comfort and the precision of the prosthetic fit. The common steps related to scanning in a dental implantology procedure are:
- Preparing the patient and of the work area
   Before starting the scan, it is essential to ensure optimal conditions in the buccal cavity to avoid errors in data capture. The previous steps include: a clinical evaluation in which the edentulous area is inspected; drying and humidity control in the buccal cavity.
- Capturing data with the intraoral scanner The intraoral scanner uses optical technology to capture thousands of images and digitally reconstruct the buccal cavity. The scanning sequence must be orderly and systematic to prevent distortions in the final model and may comprise the following steps:
   a) Initial complete scanning of the arch, in which an initial scan of the oral cavity is made to record the morphology of the soft tissues and the bone topography. The patient's bite can also be recorded by occlusion scan to obtain a precise relationship between the maxilla and mandible of the buccal cavity.
   b) Inserting a scanbody (if the patient already has an osseointegrated implant) compatible with the implant system used (and verifying the correct seating thereof in the connection of the implant), such that, from this component, the software recognises the position, angling, and depth of the implant.
   c) Scanning with the scanbody, in which the area where the implant is located is captured with the scanbody in place, it being crucial that the scanner clearly detects the geometric references of the scanbody for its correct identification in the CAD software. As with the initial scan, it is possible to scan the bite again, in order to try to ensure that the final prosthesis has correct functional and aesthetic alignment.

From the intraoral scan, at least a first digital buccal model of the buccal cavity is obtained, prior to performing any dental implantology treatment in said buccal cavity and at least a second digital buccal model, after said implantology treatment that allow a comparison between the two. Intraoral scanning allows for real-time verification by displaying the scanned digital buccal model on a screen and detecting possible errors, such as missing areas or incomplete scanning of the scanbody.

After scanning, the digital buccal model must be processed and exported by means of processing the data obtained to generate a three-dimensional digital file. This model can be edited and improved in the scanner software before exporting by means of: correcting imperfections, eliminating reflections or superfluous data that may alter the precision of the model; aligning with digital libraries, such that if a scanbody has been used, the software associates it with the implant manufacturer's database, allowing for its correct integration into the prosthesis design; and exporting the file, such that the final model is stored in formats compatible with CAD/CAM systems (for example, STL or PLY formats) for subsequently sending to the dental laboratory for the design and manufacture of the prosthesis.

Thus, intraoral scanning is a key tool in digital dental implantology, as it allows for precise records of the buccal cavity without the need for traditional impressions, improving precision in the manufacture of dental prostheses, reducing work times, and optimising clinical results for the patient. The success of the scan depends mainly on the correct preparation of the patient and a suitable scanning technique, as well as the use of software compatible with the implant systems.

Therefore, in current methods, the precision and accuracy in the manufacture of implant-supported dental prostheses depends on the ability to perform scans that correctly reflect the anatomical situation at each step of the process, from preoperative planning to the completion of the restoration. One of the main problems in known digital workflow procedures for dental prosthesis implantation is the absence of a fixed and stable reference during the different steps of the procedure. The lack of a reliable reference that allows for the comparison of preoperative scans of the buccal cavity with the intraoperative and postoperative conditions of said buccal cavity makes it difficult to produce precise dental prostheses.

The present invention addresses this need by providing an effective solution that ensures greater stability and reproducibility in the scanning process by means of the use of fixed buccal scan positioning pins, or scan pins, used as a preoperative, intraoperative, and postoperative reference, providing a precise scannable reference facilitating a restoration that is more accurate and has a greater aesthetic functionality.

### DESCRIPTION OF THE INVENTION

The present invention therefore relates to a buccal scan positioning pin and to a digital workflow method in the implantation of dental prostheses.

Therefore, the first object of the present invention relates, according to the claim 1, to a buccal scan positioning abutment. Said positioning abutment preferably has:
- an interlocking body with two ends, a first anchoring or interlocking end and a second support end; and
- a scanbody with a symmetrical three-dimensional geometry with connection means for connection with the second support end of the interlocking body.

Said three-dimensional geometry preferably has a T-shaped cross-section, with a horizontal portion and a vertical portion perpendicular to the horizontal portion, said vertical portion incorporating the connection means for connection with the interlocking body. The shape of the horizontal portion, preferably incorporating a six-point star, allows the scanned image of the body to be the same, therefore determining the same image regardless of the position of the scanning positioner.

Both the scanbody and the interlocking body are made of a biocompatible material, preferably titanium, although the scanbody also can be made of PEEK.

The interlocking body preferably has a thread as an anchoring or interlocking end intended to be inserted into a bone region in a patient's buccal region. The opposite end, i.e. the support end, preferably has a threaded hole to receive the connection means of the scanbody. Said connection means are preferably a thread projecting from the vertical portion of the scanbody. Similarly, the scanbody may have an opening or through-hole that a screw goes through. In both alternatives, the scanbody can be screwed onto the anchoring body, with the thread being integrated in the scanbody itself or being part of an independent screw.

Alternatively, the connection means is a magnet that is coupled to the support end of the interlocking body.

Temporary connection means are those which allow the attachment and detachment of the scanbody with respect to the interlocking body when required. Alternatively, the connection means are permanent, such that the anchoring body and the scanbody form a single piece.

A second object of the invention is a digital workflow method in the implantation of dental prostheses according to claim 5. The method incorporates the following steps:
- performing a first scan, or a preoperative scan, of a buccal cavity to determine the location of at least two scan positioning pins, according to any of claims 1 to 4, positioned in said buccal cavity, to know the biodynamic position of said two positioning pins with respect to the remaining natural elements in the buccal cavity;
- obtaining a first digital buccal model, or preoperative model, from the first scan showing the positioning pins and the natural elements in the buccal cavity;
- performing dental work, including the implantation of at least one dental implant and/ or the installation of at least one scan abutment on said implant;
- performing a second scan, or surgical scan, of the buccal cavity to determine the location of the scan positioning pins with respect to the at least one dental implant and/or scan abutment and of the natural elements in the buccal cavity;
- obtaining a second digital buccal model, or surgical model, from said second scan showing the positioning pins, the natural buccal elements, and the at least one dental implant and/or scan abutment; and
- performing a first digital comparison of the first digital buccal model and of the second digital buccal model to verify and reference the initial biodynamic position, facilitating the design of a dental prosthesis to be installed on the at least one dental implant from maintenance of the initial locations of the position of the buccal scan positioning pins.

Therefore, from the digital comparison, it is possible to design and manufacture a provisional dental prosthesis adapted to the real anatomy of the buccal cavity, ensuring a precise positioning, for which the mentioned buccal scan positioning pins, which are put in place before any surgical procedure, are used. After the placement of the implants, a new scan of the buccal cavity is performed, allowing the recording of the exact position of the implants while the initial references of the scan positioning pins are maintained. This facilitates the precise placement of the provisional prosthesis in a first step and, subsequently, of the definitive prosthesis as a final result of the process.

This protocol assures that the position of the prosthesis respects the biomechanics and initial references, preventing deviations in the placement of the implants and ensuring greater stability and functional adaptation of the definitive prosthesis.

Once the digital workflow method has been performed, and after the necessary scans have been performed, the buccal scan positioning pins are removed from the buccal cavity, both the scanbody and the anchoring body.

Therefore, the invention relates to a device for a buccal scan positioning pin and to a digital workflow method in dental implantology, which allows the use of at least two buccal scan positioning pins as fixed, stable, and scannable references throughout the entire digital workflow in the dental implantology process, from the preoperative scan or first scan up to the second scan performed in a postoperative phase of the restoration dental. This method facilitates the creation of dental prostheses with greater accuracy, functionality, and aesthetic precision since the references in the buccal cavity are maintained by having the digital references of the at least two buccal positioning pins from the beginning.

To carry out the digital workflow method, it is necessary to position the buccal scan positioning pin, through the anchoring body, preferably through the threaded end of same, acting as a microimplant in specific regions of the oral or buccal cavity, preferably in retromolar or palatal areas. These scan positioning pins are anchored in the bone in a stable manner, preventing interferences with the provisional prosthesis or surgical guide and allow as a result of the scanbody thereof.

Preoperative scans are performed with the scan positioning pins providing a fixed reference during surgery. After the placement of the dental implants in a phase after the first scan, the scan positioning pins are kept in place and a second scan is performed, preferably with the scanbody placed in the dental implant, therefore providing references with the result of the first scan or a preoperative scan, enabling the creation of a final dental prosthesis with a much more precise fit.

Therefore, one of the scan positioning pins during the procedure ensures physical stability and a reproducible reference throughout the entire process, significantly improving the predictability of the treatment and the final aesthetic result with respect to buccal models obtained after scanning exclusively the biological regions of the buccal cavity, which regions can be altered during the surgical phase or be affected by natural processes that may take place in the mouth, such as inflammation, for example.

It should be noted that if the scanbody of the buccal scan positioning pin can be detached from the anchoring body thereof, said scanbody can be temporarily removed from the buccal region, after the first scan or a preoperative scan, before performing dental work in the buccal region to prevent interferences during said dental work by maintaining the fixed position of the anchoring body.

### BRIEF DESCRIPTION OF THE DRAWINGS

To complement the description being made and for the purpose of helping to understand the features of the invention, a set of illustrative and non-limiting figures is attached as a part of said description.
Figure 1 shows an exploded view of a buccal scan positioning pin according to the present invention.
Figure 2 shows two buccal scan positioning pins prior to the anchoring thereof to a buccal region, namely in the palate.
Figures 3 and 4 show two views of two buccal scan positioning pins anchored in a buccal region, namely in the palate.
Figure 5 shows a buccal scan positioning pin anchored in a buccal region.
Figure 6 shows an edentulous, or toothless, buccal region with buccal scan positioning pins and scanbodies installed on dental implants.
Figure 7 shows the buccal region of Figure 6 with the buccal scan positioning pins and a prosthesis installed on the dental implants.
Figure 8 shows a block diagram of the digital workflow method in the implantation of dental prostheses.

### PREFERRED EMBODIMENT OF THE INVENTION

A detailed description of different embodiments of the invention is provided below in accordance with the above figures.

The buccal scan positioning pin 1 comprises the following components:
- an interlocking body 15 with two ends, a first anchoring end 16, preferably a thread, and a second support end 17; and
- a scanbody 10 with a symmetrical three-dimensional geometry with connection means 11 with the second support end 17 of the interlocking body 15.

The connection means 11 can be integrated in the scanbody itself 10 or alternatively can be an element independent of the two aforementioned bodies. Similarly, the connection means could be integrated in the interlocking body itself.

The symmetrical three-dimensional geometry of the scanbody preferably has an approximately T-shaped cross-section, with a horizontal portion 13 and a vertical portion 14 approximately perpendicular to the horizontal portion. The shape of the horizontal portion 13 allows the scanned image of the body to be the same, regardless of the position of the scanning positioner when it is located in the buccal region. Preferably, said horizontal portion 13 has a six-point star shape.

If the scanbody integrates the connection means 11, these means will preferably be incorporated in said vertical portion 14. Preferably said connection means 11 will be a thread projecting from said vertical portion 14. This thread will be screwed into a hole 19 in the support end 17 of the anchoring body 15. Said anchoring body 15 may comprise a support surface 18 as the base for the support end 17 where the vertical portion 14 of the scanbody 10 can be supported.

Alternatively, the connection means can be an independent screw 11 that goes through an opening or hole 12 in the scanbody 10 until the thread of the screw 11 projects from the lower part of the vertical portion 14 to subsequently be screwed into the hole 19 of the anchoring body 15.

Alternatively, the connection means can be a magnet, arranged in the anchoring body or in the scanbody to be coupled to the scanbody or anchoring body, respectively.

In another alternative, the anchoring body has a thread at the support end, and the scanbody has a threaded hole in the vertical portion to receive the thread of the anchoring body.

In the above solutions, the anchoring body 15 and the scanbody 10 are attached by temporary connection means, i.e., means that allow both bodies to be detached from one another. Alternatively, it is possible to have a buccal scan positioning pin 1 in which both bodies form a single piece with the connection means integrated in the piece, i.e., the two bodies cannot be detached from one another.

Preferably, both bodies 10, 15 are made of a biocompatible material, preferably titanium. Similarly, the scanbody 10 can be made of PEEK.

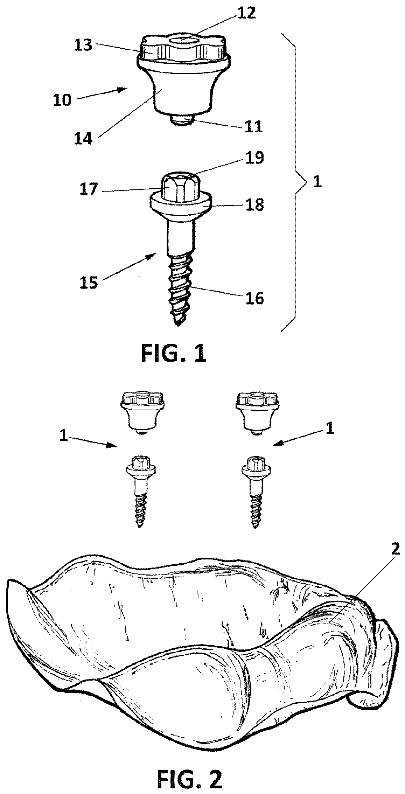

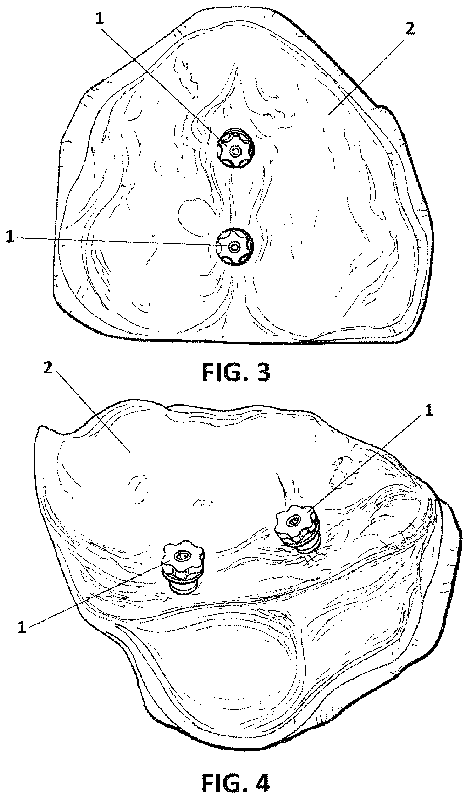

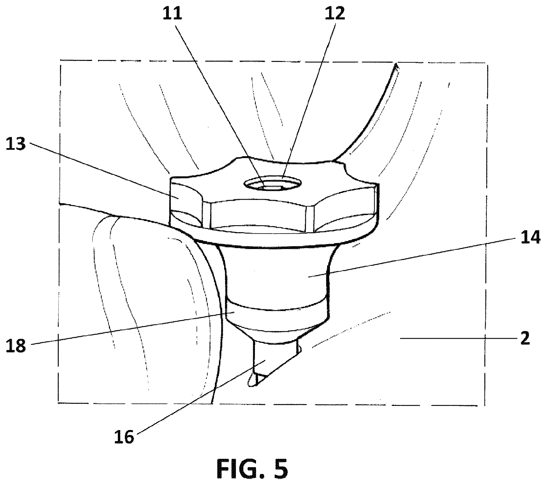

At least two of these buccal scan positioning pins 1 are preferably located in a bone region in the buccal cavity, namely in retromolar or palatal areas, preventing interferences with the surgical guide or the provisional prosthesis that can be installed in the buccal cavity during the procedure. For locating same, the first anchoring end 16, which preferably threaded, is inserted into a bone region in the buccal region 2, such that the scanbodies 10 project into the buccal cavity 2 (see Figures 2 to 5).

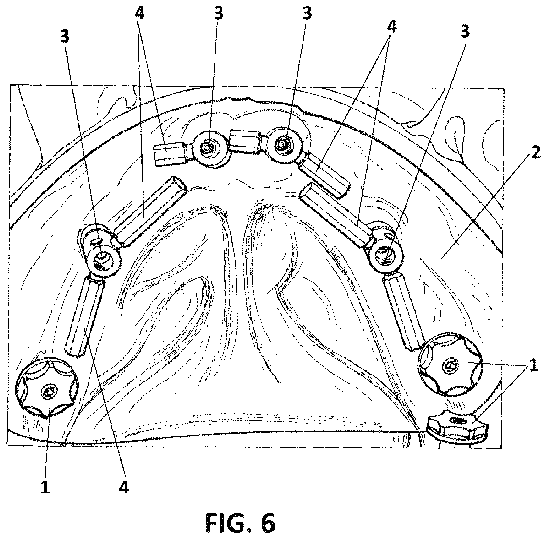

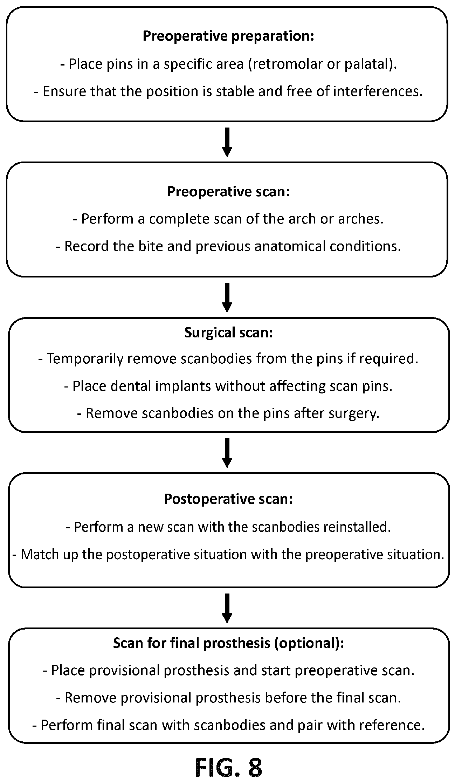

From the location of the buccal scan positioning pins 1, it is possible to carry out a digital workflow method in the implantation of dental prostheses having the following steps, according to Figure 8. Namely, the method incorporates the following steps:
- Performing a first scan, or a preoperative scan, of a buccal cavity 2 to determine the location of at least two scan positioning pins 1, as described above, positioned in said buccal cavity 2, to know the biodynamic position of said two positioning pins 1 with respect to the remaining natural elements in the buccal cavity 2. In this scan, a complete scan of the arch or arches involved in the buccal cavity 2 is performed, recording the bite and anatomical conditions before performing dental work or surgery.
- Obtaining a first digital buccal model, or preoperative model, from the first scan showing the positioning pins 1 and the natural elements in the buccal cavity 2. From the first scan, a buccal image, or buccal model, of the buccal cavity, is obtained, and it will show, as references, both the scan positioning pins 1 and the remaining natural components of the buccal cavity 2, such as teeth, bones, gingival tissue, or previously installed implants, among others.
- Performing dental work, including the implantation of at least one dental implant (not shown) and/ or the installation of at least one scan abutment 3 on said implant (not shown). The scan abutment or scanbody 3 is arranged on the dental implant, which has previously been installed in a bone region in the buccal cavity 2 in which the dental prosthesis is to be coupled. The scan abutments or scanbodies 3 can incorporate scan accessories 4 perpendicular to the abutments 3 to facilitate scanning of the buccal region 3. Figure 6 shows four scan abutments 3, arranged on four dental implants (not shown) from which there emerge perpendicular scan accessories 4. Similarly, it shows the buccal scan positioning pins 1 in the buccal region 2. For surgery or for performing dental work, if required, the scanbodies 10 can temporarily be removed from the anchoring bodies 15 to prevent interferences during said operations, maintaining the anchoring body 15 in its original location.
- Performing a second scan, or surgical scan, of the buccal cavity to determine the location of the scan positioning pins 1 with respect to the at least one dental implant and/or scan abutment 3 and the natural elements in the buccal cavity 2.
   This second scan will be used to know the position of the different elements after surgery, and incorporated, in the buccal cavity 2, as well as that of the positioning pins 1 and the relative positions between said pins.
   For this second scan, and if the scanbodies 10 of the buccal scan positioning pins 1 had previously been removed, they are connected again with the anchoring bodies 15.
- Obtaining a second digital buccal model, or surgical model, from said second scan showing the positioning pins 1, the natural buccal elements, and the at least one dental implant and/or scan abutment 3.
- Performing a first digital comparison of the first digital buccal model and of the second digital buccal model to verify and reference the initial biodynamic position, facilitating the design of a dental prosthesis to be installed on the at least one dental implant from maintenance of the initial locations of the position of the buccal scan positioning pins 1.
   The two buccal models are compared to know whether the positions of the scan positioning pins 1 are maintained with respect to the remaining elements in the buccal cavity after the step of performing dental work in the buccal cavity 2.

Alternatively, and if the digital workflow method of the invention is used for manufacturing a final implant-supported prosthesis, the same method from above is followed, therefore assuring a constant reference provided by the buccal scan positioning pins 1 which is reproducible throughout the entire sequence of the digital workflow method.

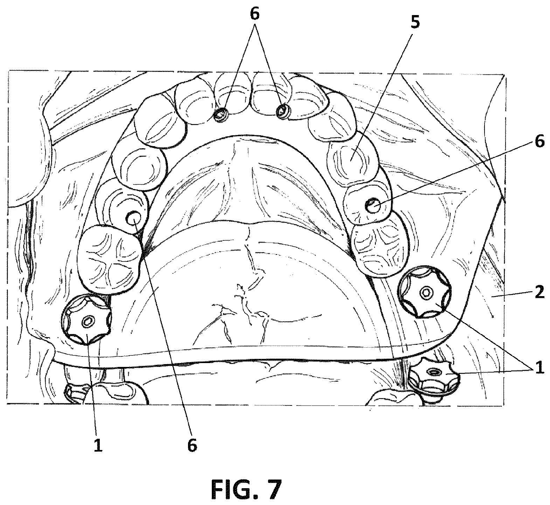

Figure 7 shows a prosthesis 5 anchored to the dental implants (not shown) by means of suitable screws 6.

Once the digital workflow method has been performed, and after the necessary scans have been performed, the buccal scan positioning pins 1 are removed from the buccal cavity 2, both the scanbody 10 and the anchoring body 15.

The method of the present invention allows for improvement to the precision, functionality, and aesthetics of implant-supported prostheses by maintaining a constant reference throughout all the phases of the method.

## Claims

1. A buccal scan positioning pin, **characterised in that** it comprises:
- an interlocking body with two ends, a first anchoring end and a second support end; and
- a scanbody with a symmetrical three-dimensional geometry with connection means for connection with the second support end of the interlocking body.

2. The pin according to claim 1, **characterised in that** the symmetrical three-dimensional geometry has a T-shaped cross-section, with a horizontal portion and a vertical portion perpendicular to the horizontal portion, said vertical portion incorporating the connection means for connection with the interlocking body.

3. The pin according to claim 1, **characterised in that** the scanbody is made of a biocompatible material, preferably PEEK or titanium.

4. The pin according to claim 1, **characterised in that** the interlocking body is made of a biocompatible material, preferably titanium.

5. A digital workflow method in the implantation of dental prostheses, **characterised in that** it comprises the following steps:
- performing a first scan, or a preoperative scan, of a buccal cavity to determine the location of at least two scan positioning pins, according to any of claims 1 to 4, positioned in said buccal cavity, to know the biodynamic position of said two positioning pins with respect to the remaining natural elements in the buccal cavity;
- obtaining a first digital buccal model, or preoperative model, from the first scan showing the positioning pins and the natural elements in the buccal cavity;
- performing dental work, including the implantation of at least one dental implant and/ or the installation of at least one scan abutment on said implant;
- performing a second scan, or surgical scan, of the buccal cavity to determine the location of the scan positioning pins with respect to the at least one dental implant and/or scan abutment and of the natural elements in the buccal cavity;
- obtaining a second digital buccal model, or surgical model, from said second scan showing the positioning pins, the natural buccal elements, and the at least one dental implant and/or scan abutment; and
- performing a first digital comparison of the first digital buccal model and of the second digital buccal model to verify and reference the initial biodynamic position, facilitating the design of a dental prosthesis to be installed on the at least one dental implant from maintenance of the initial locations of the position of the buccal scan positioning pins.
